Europäisches Patentamt

European Patent Office

Office européen des brevets

(19)

(11) Publication number: **0 227 644**
A2

(12) # EUROPEAN PATENT APPLICATION

(21) Application number: **87200132.6**

(22) Date of filing: **09.01.86**

(51) Int. Cl.⁴: **B 24 B 55/10**

(30) Priority: **18.01.85 IT 2053785 U**

(43) Date of publication of application:
**01.07.87 Bulletin 87/27**

(84) Designated Contracting States:
**BE CH DE FR GB IT LI NL**

(60) Publication number of the earlier application
in accordance with Art. 76 EPC: **0 190 775**

(71) Applicant: **Valentini, Guido**
**Via Comelico, 2**
**I-20135 Milano(IT)**

(72) Inventor: **Valentini, Guido**
**Via Comelico, 2**
**I-20135 Milano(IT)**

(74) Representative: **Mittler, Enrico et al,**
**c/o Marchi & Mittler s.r.l. Viale Lombardia, 20**
**I-20131 Milano(IT)**

(54) **Portable electrical machine tool for the machining of surfaces of materials with dust discharge duct included in the gripping handle.**

(57) The machine tools comprises a main body (10, 11, 12) provided with a gripping handle (20), an apertured polishing plate (18) onto which an apertured abrasive sheet (19) is placed, fan means (27) for sucking the dust produced by said surface machining through the aligned apertures (36, 35) of said plate (18) and said sheet (19), a discharge duct (24) for discharging the dust sucked by said fan means (27) and motor means (13) for driving said polishing plate (18) and said fan means (27). The gripping handle (20) has a cross-section shaped as a reverse U and the discharge duct (24) consists of a tubular element arranged at a lower portion of said gripping handle (20) as a closure for the same.

Fig.2

EP 0 227 644 A2

DISCLOSURE

The present invention relates to an electrical portable polishing machine tool for the machining of surfaces of materials with simplified suction of the dust produced during the abrasion operative step.

Tool machines of this type are known, which essentially comprise a main body, enclosing a vertical-axis electrical motor, provided with a handle and assembled, by means of the interposition of elastic elements, on a polishing plate on which an abrasive sheet is positioned.

Said plate and said abrasive sheet are provided with a plurality of apertures for the passage and the suction of the dust created by the polishing action by the same abrasive sheet. The produced dust is sucked inside the body of the machine tool and is discharged through a discharge duct extending outside the tool handle, substantially parallel to the same.

The presence of a separate discharge duct, to which a small bag for collecting the sucked dust is generally applied, is often an impediment for the handling of such tools, in addition to the presence of a power feeding cable extending from the same handle.

Object of the present invention is to provide a polishing tool machine in which the dust sucking means do not occupy extra space beyond the space normally occupied by the machine body and the handle.

In view of this object, according to the present invention, an electrical portable machine tool for the machining of surfaces of materials comprises a main body provided with a gripping handle, a polishing plate onto which an abrasive sheet is placed, said plate and said sheet being provided with aligned apertures for dust passage, fan means for sucking the dust produced by the surface machining through said aligned apertures, a discharge duct for discharging the dust sucked by said fan means and motor means for driving said polishing plate and said fan means, characterized in that said gripping handle has a cross-section shaped as a reverse U and said discharge duct consists of a tubular element arranged at a lower portion of said gripping handle as a closure for the same.

In this way, the discharge duct is no longer a separate piece, but is included in the gripping handle as a closure member of the same. A cavity is defined inside the handle, along which the power feeding cable may extend.

The structural and functional characteristics of a machine according to the present invention shall be better understood from the following exemplifying and not limitative disclosure, referred to the attached schematic drawings, wherein:

Figure 1 is a side elevation view of a machine according to the invention;

Fig. 2 is an elevation view equivalent to that of Fig. 1, partly in section;

Fig. 3 is a sectional view according to line III-III of Fig. 1, and

Fig. 4 is a sectional view according to line IV-IV of Fig. 1.

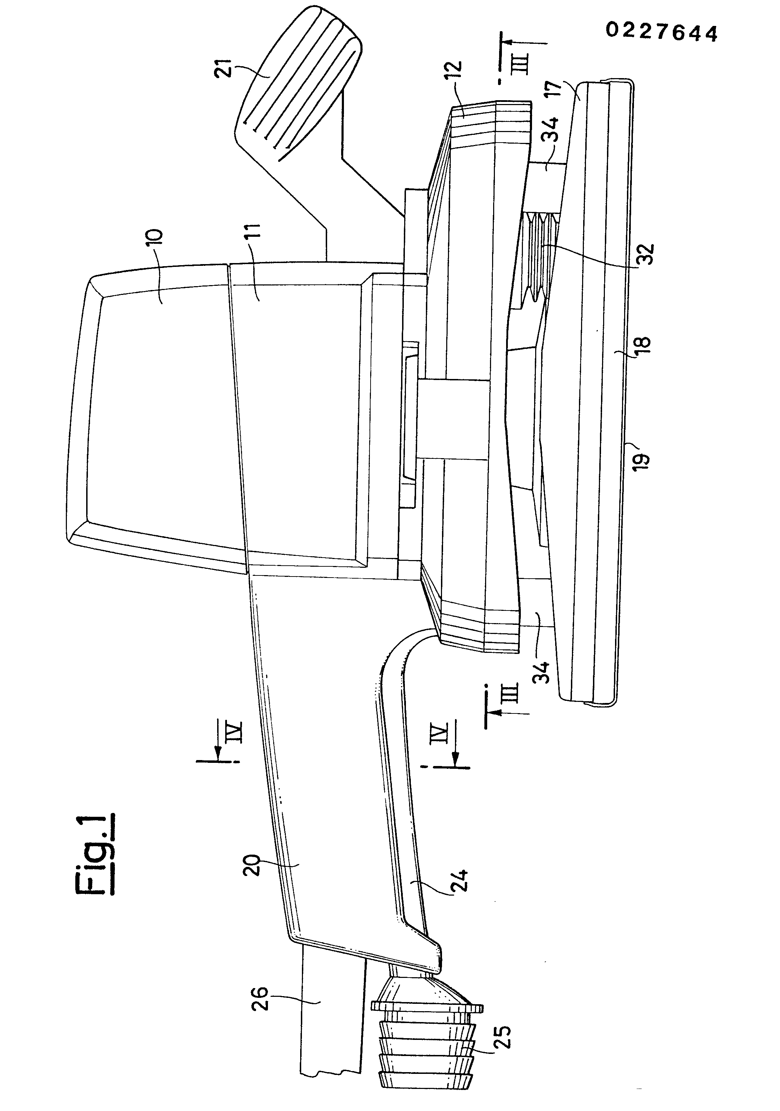

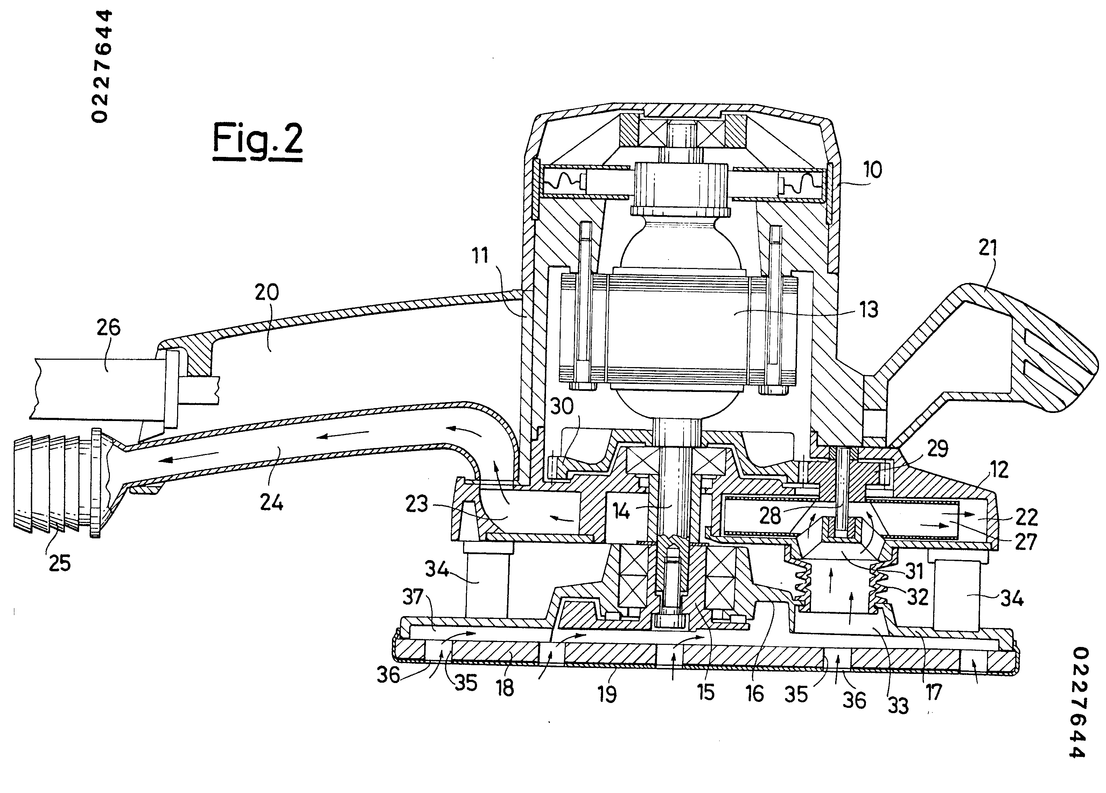

As shown in Fig. 1 and 2, an electrical portable polishing machine comprises essentially a body formed by an upper cap 10, by a central portion 11 and by a lower portion 12, rigidly linked to each other so as to constitute a single body supporting a vertical-axis electrical motor 13.

On the shaft 14 of said motor 13 an eccentric element 15 is keyed, on whichis rotatably mounted a support 16 for a covering portion 17 of a polishing plate 18 under which an abrasive sheet 19 is positioned and fastened in a known fashion.

From the central portion 11 protrude: on one side a gripping handle 20 and on the other side a gripping and pressure-exerting element 21.

In the lower portion a lateral chamber 22 is provided, from which a duct 23 extends, which is operatively connected with a discharge tubular element 24, ending into a connector or fitting 25, said tubular element 24 constituting the lower portion of the gripping handle 20.

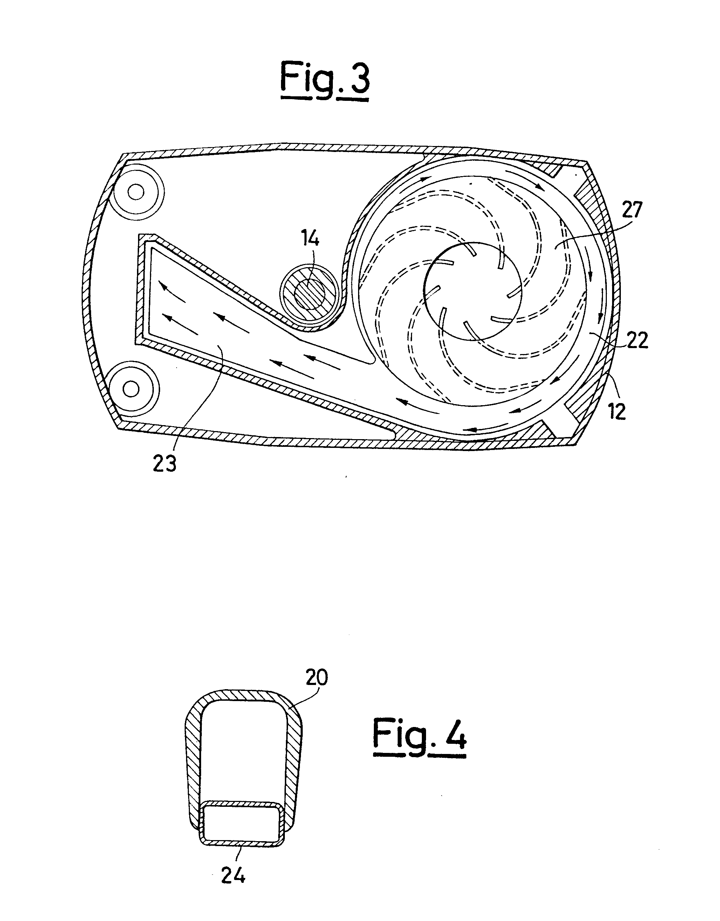

Said gripping handle 20 indeed, essentially having a reversed-U shape (Fig. 4), is closed by said tubular element 24, and houses additionally a cable 26 for the feeding of the motor 13, as well as possible electric devices for the machine operation.

The chamber 22 contains a fan 27 which receives its rotary motion from a shaft 28 solid with a first gear wheel 29, operatively coupled to and driven for rotation by a second gear wheel 30 keyed onto the shaft 14 of the motor 13.

Said chamber 22 is provided in its lower portion with an aperture 31 connected, via an elastic bellows-shaped element 32, with a port 33 provided in the upper portion of the cover 17 of the polishing plate 18.

Between said lower portion 12 and said cover 17 there are a plurality of column-shaped elastic elements 34, suitable to allow the orbital motion of the same plate and to prevent it from rotating.

The polishing plate 18 is provided with a plurality of apertures 35 aligned with corresponding apertures 36 provided in the abrasive sheet 19.

Said plurality of apertures are connected to a chamber 37 defined between said cover and said plate, and connected with the port 33.

When the electrical polishing machine comes in contact with the surface of the material to be polished, the orbital movement of the polishing plate 18 and of the related abrasive sheet 19 positioned onto it cause the formation of dust.

The dust formed is sucked, according to the arrows of Fig. 2, from the apertures 36, 35, passes into the chamber 37 and through the port 33, the bellows 32 and the aperture 31 and comes into the chamber 22 wherein the fan 27 is housed.

From said chamber the dust is then sent through the duct 23 and the tubular element 24 to a collecting means, which may be either positioned solid with the connector 25 or placed in a remote site and connected with it viaa flexible pipe, not shown.

It results particularly advantageous the provision of the two gear wheels 29, 30, or of whatever other couple of kinematic elements, such as e.g., toothed wheels or pulleys with related transmission belts, such as to allow the fan 27 to turn at a higher speed than the motor 13, thus allowing a considerable suction.

Advantageously, the greater or lesser adhesion between the abrasive sheet and the material under machining, by influencing the motor speed, causes consequently an equal adjustment of the turning speed of the fan 27, thus varying the suction efficiency.

It is also advantageous to note that the tubular element 24, besides acting as suction duct, performs the function of lower closure of the gripping handle 20 and is hence suitable to be easily fitted to it.

CLAIMS

1. Electrical portable machine tool for the machining of surfaces of materials, comprising a main body (10, 11, 12) provided with a gripping handle (20), a polishing plate (18) onto which an abrasive sheet (19) is placed, said plate (18) and said sheet (19) being provided with aligned apertures (36, 35) for dust passage, fan means (27) for sucking the dust produced by said surface machining through said aligned apertures (36, 35), a discharge duct (24) for discharging the dust sucked by said fan means (27) and motor means (13) for driving said polishing plate (18) and said fan means (27), characterized in that said gripping handle (20) has a cross-section shaped as a reverse U and said discharge duct (24) consists of a tubular element arranged at a lower portion of said gripping handle (20) as a closure for the same.

2. Machine tool according to claim 1, characterized in that said fan means (27) is placed in a chamber (22) arranged in a lower portion (12) of the body and laterally with respect to the motor shaft (14), said chamber (22) communicating with said discharge duct (24) by means of a connecting duct (23) extending laterally from said chamber (22) and said fan means (27).

3. Machine tool according to claim 1, characterized in that said gripping handle (20) provides a housing above said discharge duct (24) for a power feeding cable (26) and other electric devices.

# Fig.1

1/3

0227644

Fig.2

0227644

2/3

0227644

## Fig.3

## Fig.4